(19) Europäisches Patentamt
European Patent Office
Office européen des brevets

(11) Veröffentlichungsnummer: **0 313 951 B1**

(12) # EUROPÄISCHE PATENTSCHRIFT

(45) Veröffentlichungstag der Patentschrift: **18.11.93**

(51) Int. Cl.[5]: **C08G 18/40**, C08G 18/44, C08G 18/66, D06N 3/14, C09D 175/04, C09D 175/08

(21) Anmeldenummer: **88117224.1**

(22) Anmeldetag: **17.10.88**

Die Akte enthält technische Angaben, die nach dem Eingang der Anmeldung eingereicht wurden und die nicht in dieser Patentschrift enthalten sind.

(54) **Verfahren zur Herstellung von Beschichtungen.**

(30) Priorität: **29.10.87 DE 3736652**

(43) Veröffentlichungstag der Anmeldung:
**03.05.89 Patentblatt 89/18**

(45) Bekanntmachung des Hinweises auf die Patenterteilung:
**18.11.93 Patentblatt 93/46**

(84) Benannte Vertragsstaaten:
**AT BE CH DE ES FR GB IT LI NL**

(56) Entgegenhaltungen:
**EP-A- 0 038 202**
**EP-A- 0 073 392**
**DE-B- 1 226 071**
**US-A- 4 435 527**

(73) Patentinhaber: **BAYER AG**

**D-51368 Leverkusen(DE)**

(72) Erfinder: **Noll, Klaus, Dr.**
**Morgengraben 6**
**D-5000 Köln 80(DE)**
Erfinder: **Pedain, Josef, Dr.**
**Haferkamp 6**
**D-5000 Köln 80(DE)**
Erfinder: **Thoma, Wilhelm, Dr.**
**Birkenweg 25**
**D-5090 Leverkusen 3(DE)**
Erfinder: **Schröer, Walter, Dr.**
**Nicolai-Hartmann-Strasse 2**
**D-5090 Leverkusen 1(DE)**

EP 0 313 951 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Beschichtungen, insbesondere auf textilen Flächengebilden, unter Verwendung von Polyurethan(harnstoff)en.

Beschichtungen mit hoher Wasserdampfdurchlässigkeit sind in der Vergangenheit immer wieder das Ziel von Untersuchungen und Entwicklungen gewesen, da nur sie sich z.B. für die Herstellung hochwertiger Ledersubstitute oder für Bekleidungsstücke mit hohem Tragekomfort eignen.

Solche Beschichtungen lassen sich auf verschiedenen Wegen erzeugen, von denen die wichtigsten hier kurz skizziert seien. Seit geraumer Zeit ist ein Verfahren bekannt, das die Erzeugung von Mikroporen in einer Beschichtung auf physikalischem Wege ermöglicht; ein Polymeres (und hier wie im folgenden ist darunter hauptsächlich ein Polyurethan zu verstehen), das in einem Löser gelöst ist, wird auf ein Substrat oder einen Trennträger schichtförmig aufgebracht und im naßen Zustand in ein Bad geführt, das einen Nichtlöser für das Polymere enthält, welcher allerdings mit dem Löser mischbar ist. Der Nichtlöser dringt infolgedessen in die Lösungsschicht ein, wo er den Festkörper allmählich ausfällt. Bei der Trocknung des so entstandenen verfestigten Films hinterlassen der entweichende Löser wie auch der Nichtlöser Mikrokanäle, die in der Beschichtung für den Wasserdampftransport zur Verfügung stehen (DE-PS 888 766, DE-AS 1 110 607).

In ähnlicher Weise lassen sich nach Beimischung von Salzpulvern zur Polymerlösung Überzüge erzeugen, aus denen mit Wasser das Salz unter Hinterlassung von Mikrokavitationen ausgewaschen werden kann (FR 95 376, BE 610 266).

Auch die Perforation von kompakte Folien mit Hilfe energiereicher Elektronenstrahlen (DE-PS 950 090, NL 6 502 039) führt zu laminierbaren Filmen mit hoher Wasserdampfdurchlässigkeit. (In der Regel ist beim wasserdampfdurchlässigen Überzug das pro Zeit- und Flächeneinheit transportierte Wasserdampfvolumen mehr als 10 mal so hoch wie bei einem üblichen kompakten Film).

Diese Verfahren besitzen generell den Nachteil, daß sie chemisch kompliziert oder apparativ aufwendig sind oder aber erhebliche Abfallprobleme aufwerfen.

Zur Zeit wird daher eine Variante der Mikroporös-Beschichtung technisch durchgeführt, die ohne die technologisch komplizierte Tauchbadtechnologie auskommt, aber im wesentlichen zu gleichen Ergebnissen führt. Bei diesem Verfahren, auch als Verdampfungskoagulation bekannt, wird der Lösung des Polymeren in einem niedrig siedenen Löser soviel Wasser zugesetzt, daß die resultierende Streichpaste gerade noch stabil und applizierbar ist. Beim Abdunsten entweicht der organische Löser zuerst; das sich immer mehr anreichernde Wasser fällt den Festkörper wie beim Tauchverfahren aus und entweicht schließlich beim Trocknen unter Hinterlassen einer mikroporösen Struktur in der Folie (DE-OS 1694 205 und 1994 179).

Alle diese Verfahren haben jedoch den wesentlichen Nachteil, daß Mikrokanäle oder Mikrokavitationen eine Schwächung des wasserdampfdurchlässigen Überzuges bewirken. Das heißt, daß mechanische Zugfestigkeit und Abriebbeständigkeit gegenüber einem kompakten Film deutlich abfallen. Außerdem ist die Dichtigkeit gegenüber Wasser nicht immer so hoch, wie sie für etliche Anwendungen (z. B. Regenbekleidung) gefordert werden muß.

Es hat daher von Anfang an nicht an Bemühungen gefehlt, Wasserdampfdurchlässigkeit in einem Überzug nicht nur durch physikalische Methoden, sondern auch auf chemischem Wege zu erzeugen. Bis ins Jahr 1962 gehen Bemühungen zurück, solche Beschichtungen mit Polyurethanen herzustellen, die teilweise aus wasserlöslichen oder hydrophilen Aufbaukomponenten bestehen. In der DE-AS 1 220 384 und der DE-AS 1 226 071 werden Polyurethane beschrieben, die aus Glykolen, Diisocyanaten und einer difunktionellen hydrophilen Aufbaukomponente, die die Wasserdampfdurchlässigkeit der Beschichtung bewirkt und ein Makrodiol darstellt, bestehen. Es handelt bei dieser sich in beiden Fällen um Polyethylenglykol mit einem Molgewicht um 1000; die beiden Anmeldungen unterscheiden sich nur hinsichtlich des "Vulkanisations"-Mechanismus, also der nachträglichen Vernetzung des Polyurethanelastomeren.

Ebenfalls wasserdampfdurchlässig sind kompakte Deckstriche auf Verbundstoffen aus textilen Substraten und mikroporösen Beschichtungen, wie sie in der DE-OS 2 020 153 beschrieben werden.

Auch als Diolkomponente in Polyesterpolyolen für Polyurethanelastomere lassen sich Polyethylenglykole verwenden, um, wie die japanische Patentanmeldung 61 009 423 lehrt, gut wasserdampfdurchlässige Beschichtungen mit vernachlässigbarer Wasserquellung zu erzeugen.

Segmentierte Polyurethanelastomere aus Polyethylenglykolen beschreibt auch die Europäische Patentanmeldung 52 915.

Auch andere organische hydrophile Komponenten wurden Polyurethanen zugesetzt, um wasserdampfdurchlässige Beschichtungen und Verbundmaterialien herzustellen; insbesondere Poly-$\gamma$-methylglutamat kann Polyurethanen zugesetzt, in ihnen als Aufbaukomponente verwendet, oder ihnen aufgepfropft werden. Aus der Vielzahl der diese Anwendung beschreibenden Literaturstellen seien hier erwähnt die DE-OS 1 922

329, DE-OS 1 949 060 sowie die japanischen Patentanmeldungen 58 057 420 und 59 036 781.

Von besonderem technischen Interesse für das Gebiet der wasserdampfdurchlässigen kompakten Beschichtungsmittel sind in jüngster Zeit hauptsächlich Polyurethane, die als Aufbaukomponenten die oben erwähnten Polyethylenglykole enthalten; diese Rohstoffe sind preisgünstig, allgemein verfügbar und technisch gut zugänglich.

Auch die daraus erhältlichen Polyurethane und Polyurethanharnstoffe sind im Prinzip gut bekannt. Im Gegensatz zu den weit verbreiteten Polyurethan(harnstoff)en, die als Makrodiole Polyester, Polycarbonate oder Polyether enthalten, sind sie wasseraufnahmefähig, permeabel für Wasserdampf, ja gelegentlich sogar in Wasser stark quellbar oder löslich.

Aus diesem Grunde werden den die Hydrophilie verursachenden Polyethylenglykolen hydrophobe Polyole beigemischt; aus diesen Gemischen lassen sich Polyurethane bzw. Polyurethanharnstoffe herstellen, die gute Wasserdampdfurchlässigkeit mit guter Resistenz gegen die Einflüsse flüssigen Wassers verbinden.

Da die Flächengebilde aus solchen Polyurethanen in natürlicher Umgebung immer einer mehr oder weniger hohen Luftfeuchtigkeit ausgesetzt sind und ihrer Natur wegen auch höhere Mengen Wasserdampf speichern als gewöhnliche wasserdampfdichte Polymerfilme, müssen außerordentlich hohe Anforderungen an die Hydrolysebeständigkeit der eingesetzten Ausgangsmaterialien gestellt werden. Handelsübliche Hydroxylpolyester erfüllen diese Forderungen nur unzulänglich. Ausreichende Beständigkeit gegen hydrolytischen Abbau weisen dagegen die ebenfalls hinlänglich bekannten Polypropylenglykole und Polytetramethylenglykole auf. Sie besitzen aber gleichzeitig zwei gravierende Nachteile:

1. Hohe Empfindlichkeit gegen Luftsauerstoff und UV-Strahlung.
2. Mangelnde Beständigkeit der aus ihnen hergestellten Beschichtungsmittel gegen Knickung.

Lassen sich die unter 1. genannten Nachteile noch durch geeignete Stabilisatoren auf ein erträgliches Maß reduzieren, so ist die mangelnde Knickbeständigkeit ein inhärenter Nachteil.

Überraschenderweise führt das im folgenden beschriebene erfindungsgemäße Verfahren zu kompakten, wasserdampfdurchlässigen Beschichtungen mit guter Knickbeständigkeit und ausgezeichneter Hydrolysestabilität.

Die vorliegende Erfindung betriff ein Verfahren zur Herstellung von Beschichtungen unter Verwendung von Polyurethan(harnstoff)en aus Diisocyanaten und Dihydroxyverbindungen vom Molekulargewich 300 - 6000 sowie gegebenenfalls weiteren Aufbaukomponenten, die Aminogruppen aufweisen können, und/oder Zusatzstoffen, dadurch gekennzeichnet, daß die Dihydroxyverbindungen aus A) 20-60 Gew.-% gegebenenfalls modifizierten Polyethylenglykolen, B) 1 - 80 Gew.-% Polycarbonaten, deren Diolkomponente 40 - 100 Gew.-% Umsetzungsprodukt aus 1 Mol Hexandiol-1.6 und 1 bis 2 Mol Caprolacton enthält, und C) gegebenenfalls anderen Dihydroxyverbindungen bestehen, wobei (A) + (B) + (C) = 100 Gew.-%.

Als weitere Aufbaukomponenten zur Herstellung der erfindungsgemäß verwendeten Polyurethan(harnstoff)e kommen insbesondere Kettenverlängerer vom Molgewicht 60 - 299, die 1 - 4 Hydroxyl- oder Aminogruppen aufweisen, in Betracht.

Unter den als Komponente B) eingesetzten hydroxylgruppenhaltigen Polycarbonaten sind Ester der Kohlensäure zu verstehen, die durch Reaktion von Kohlesäurederivaten, z.B. Diphenylcarbonat oder Phosgen, mit Diolen erhalten wurden. Die Diolkomponente enthält 40 - 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit ≧1 Mol, bevorzugt 1 - 2 Mol Caprolacton, oder durch Veretherung von Hexandiol mit sich selbst zum Di- oder Trihexylenglykol erhalten wurden. Die Herstellung solcher Derivate ist z.B. aus DE-AS 1 570 540 bekannt.

Anteilig können zur Herstellung der hydroxylgruppenhaltigen Polycarbonate andere Diole mitverwendet werden. Als derartige Diole kommen zum Beispiel Ethylenglykol, Propandiol-1,2 und -1,3, Butandiol-1,4 und -1,3, Octandiol-1,8, Neopentylglykol, 1,4-Bishydroxymethylcyclohexan, 2-Methyl-1,3-propandiol, 2,2,4-Trimethylpentandiol-1,3, ferner Diethylenglykol, Dipropylenglykol, Polypropylenglykole, Dibutylenglykol, Polybutylenglykole, Bisphenol A, Tetrabrombisphenol A in Frage.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.

Zur Modifizierung bestimmter Eigenschaften der erfindungsgemäß hergestellten Beschichtungen, wie Griff, Oberflächenglätte, können weitere Oligomere eingesetzt werden, nämlich Polysiloxan-Segmente enthaltende Verbindungen mit mindestens zwei end- und/oder seitenständigen, gegenüber Isocyanaten reaktionsfähigen Gruppen mit Molekulargewichten von 300 bis 6000, vorzugsweise von 500 bis 1500. Bevorzugt werden difunktionelle Polysiloxane mit organofunktionellen Endgruppen eingesetzt. Diese Verbindungen weisen Struktureinheiten der Formel -O-Si-$(R)_2$- auf, wobei R für einen $C_1$-$C_4$-Alkyl- oder einen Phenylrest, vorzugsweise jedoch für einen Methylrest steht.

Erfindungsgemäß als Ausgangsmaterial geeignete organofunktionelle, lineare Polysiloxane sind beispielsweise in DE-AS 1 114 632, 1 190 176, 1 248 287, 2 543 638 oder in DE-OS 2 356 692, 2 445 648, 2 363 452, 2 427 273 oder 2 558 523 beschrieben. Die organofunktionellen Endgruppen stellen vorzugsweise aliphatische, gegebenenfalls Heteroatome wie insbesondere Sauerstoff enthaltende Kohlenwasserstoffreste dar, die eine Hydroxyl-, Carboxyl-, Mercapto-oder primäre bzw. sekundäre Aminogruppe aufweisen. Zu den bevorzugten carbofunktionellen Gruppen gehören primäre und sekundäre Hydroxylgruppen sowie sekundäre Aminogruppen. Besonders bevorzugt sind solche Ausgangsverbindungen, die endständig primäre Hydroxylgruppen aufweisen. Die organofunktionellen Gruppen können in den Ausgangsmaterialien beispielsweise in Form folgender carbofunktioneller Reste vorliegen:

$-CH_2-OH$, $-(CH_2)_4-OH$, $-CH_2-O-CH_2-CH_2-OH$,

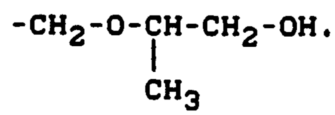

Die organofunktionellen Polysiloxane weisen 3 - 50, vorzugsweise 5 bis 20, Struktureinheiten der Formel -O-$Si(R)_2$- bei einem Molekulargewicht von 300 bis 6000, bevorzugt zwischen 500 und 1500 auf.

Erfindungsgemäß als Ausgangsverbindungen besonders bevorzugt sind Hydroxymethylpolysiloxane der allgemeinen Formel

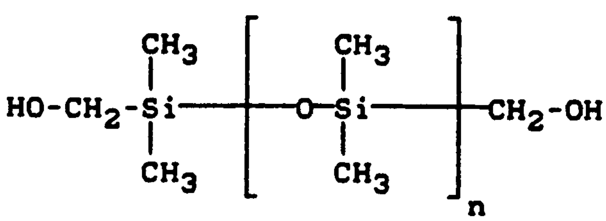

$n = 3$ bis 50

wie sie in an sich bekannter Weise, zum Beispiel nach dem Verfahren der DE-AS 1 236 505 hergestellt werden.

Der Anteil der organofunktionellen Polysiloxane an der Gesamtmenge der Makropolyole sollte vorzugsweise 0 - 15 Gew.-%, besonders bevorzugt 1 - 10 Gew.-%, betragen.

Die für die Wasserdampfdurchlässigkeit der beim erfindungsgemäßen Verfahren zu verwendenden Polyurethan(harnstoff)e verantwortlichen hydrophilen Komponenten werden in Form von gegebenenfalls modifizierten Polyethylenglykolen eingeführt. Es handelt sich hierbei um Hydroxylpolyether aus Ethylenoxid und den oben beispielhaft aufgeführten Diolen als Starter. Unter ihnen ist besonders Ethylenglykol bevorzugt.

Die entstehenden Polyethylenglykole haben ein Molekulargewicht von 300 bis 6000, vorzugsweise 500 bis 3000, besonders bevorzugt 800 - 2500. Außer den reinen Polyethylenglykolen, die bevorzugt eingesetzt werden, können auch solche eingesetzt werden, die andere Alkylenoxide, beispielsweise Propylen- oder Butylenoxid, in einen Anteil von vorzugsweise bis zu 25 Mol-% enthalten. Darüber hinaus sind auch durch Ester- oder Urethangruppen modifizierte Polyethylenglykole einsetzbar.

Der Anteil der gegebenenfalls modifizierten Polyethylenglykole an der Gesamtmenge der Polyole soll 20 - 60 Gew.-% betragen, vorzugsweise 25 - 50 Gew.-%. Dies entspricht einem Anteil am gesamten Polyurethan(harnstoff) von vorzugsweise etwa 15 -45 Gew.-%.

Als Diisocyanate kommen in Betracht Verbindungen der Formel $Q(NCO)_2$, wobei Q für einen aliphatischen Kohlenwasserstoffrest mit 4 bis 12 Kohlenstoffatomen, einen cycloaliphatischen Kohlenwasserstoffrest mit 6 bis 25 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4′-Diisocyanatodicyclohexylmethan, 4,4′-Diisocyanato-3,3′-dimethyl-dicyclohexylmethan, 4,4′-Diisocyanatodicyclohexylpropan-(2,2), 1,4-Diisocyanatobenzol, 2,4-oder 2,6-Diisocyanatotoluol bzw. Gemische dieser Isomeren, 4,4′-, 2,4′- oder 2,2′-Diisocyanatodiphenylmethan bzw. Gemische der Isomeren, 4,4′-Diisocyanatodiphenylpropan-(2,2), p-Xylylendiisocyanat und $\alpha,\alpha,\alpha',\alpha'$-Tetramethyl-m- oder -p-xylylendiisocyanat sowie aus diesen Verbindungen bestehende Gemische.

Besonders bevorzugt (mindestens zu 50 Mol-% aller Diisocyanate) eingesetzte Diisocyanate sind das Isophorondiisocyanat und das 4,4′-Diisocyanato-dicyclohexylmethan.

Es ist selbstverständlich auch möglich, beim erfindungsgemäßen Verfahren die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

Als gegebenenfalls mitzuverwendende niedermolekulare Kettenverlängerer mit Hydroxylgruppen kommen die oben bereits beispielhaft aufgeführten Di- und Polyole in Betracht.

Jedoch können als Kettenverlängerer unter Abänderung der Herstellungsweise der Polyurethan(harnstoffe) auch Diamine verwendet werden. Hierbei handelt es sich vorzugsweise um aliphatische oder cycloaliphatische Diamine, obwohl gegebenenfalls auch anteilig tri- oder höherfunktionelle Polyamine zur Erzielung eines gewissen Verzweigungsgrades mitverwendet werden können. Beispiele geeigneter aliphatischer Polyamine sind Ethylendiamin, Trimethylendiamin, Tetramethylendiamin, Hexamethylendiamin, Propylendiamin-1,2, das Isomerengemisch von 2,2,4- und 2,4,4-Trimethylhexamethylendiamin und Bis-($\beta$-aminoethyl)-amin (Diethylentriamin).

Beispiele geeigneter cycloaliphatischer Polyamine sind:

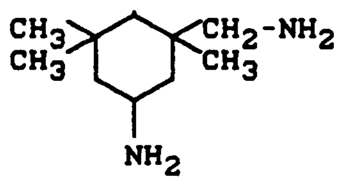

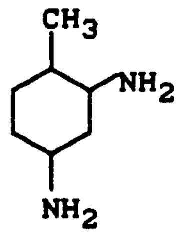

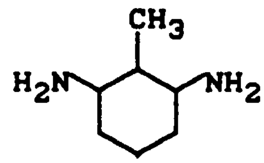

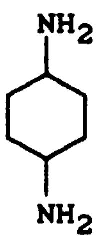

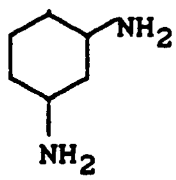

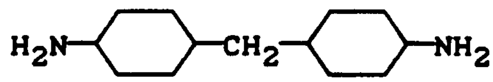

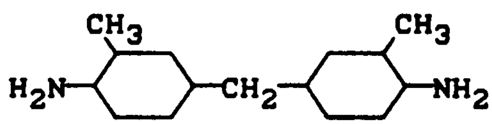

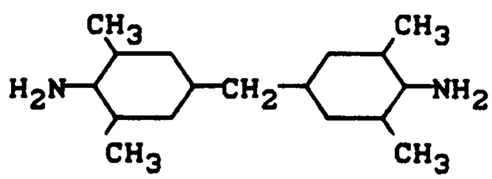

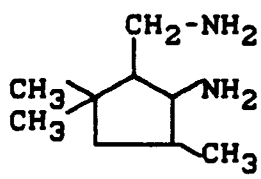

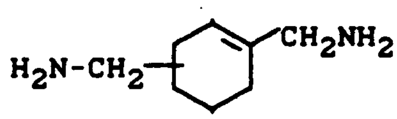

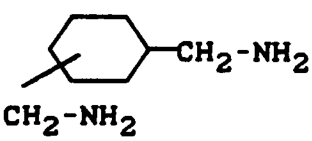

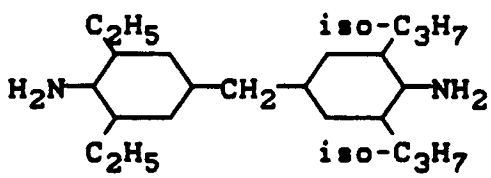

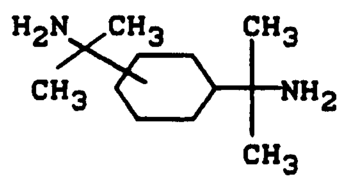

(m/p)

Auch araliphatische Polyamine, wie zum Beispiel 1,3- und 1,4-Xylylendiamin oder α,α,α',α'-Tetramethyl-1,3- und 1,4-xylylendiamin lassen sich als Kettenverlängerungsmittel für die erfindungsgemäßen Polyurethane einsetzen. Bevorzugtes Diamin ist das Isophorondiamin bzw. das 4,4'-Diamino-dicyclohexylmethan (in Mengen von vorzugsweise ≧50 Mol-% der Diamine).

Besonders bevorzugt ist jedoch die (Mit)-verwendung von Hydrazin in Form seines Monohydrates oder von Derivaten, etwa als Hydrazomonocarbonsäure- oder Hydrazodicarbonsäureester, welche isocyanataktive Gruppen enthalten, als Kettenverlängerer.

Die Polyurethan(harnstoff)e werden vorzugsweise so hergestellt, daß zunächst aus Diisocyanaten, Makrodiolen und gegebenenfalls niedermolekularen Hydroxylverbindungen ein mindestens zwei endständige Isocyanatgruppen aufweisendes Prepolymer gebildet wird. Sollen nur Hydroxylgruppen tragende Kettenverlängerungsmittel zum Aufbau des Hochpolymeren verwendet werden, so können alle Hydroxyl- und alle Isocyanatverbindungen miteinander so vermischt werden, daß das NCO/OH-Verhältnis vorzugsweise zwischen 1,05 und 0,95 liegt. Derartige Polyurethane können in Substanz oder in einem geeigneten Lösungsmittel hergestellt werden.

Wird jedoch ein Prepolymer hergestellt, das der weiteren Kettenverlängerung durch Diole oder Diamine zugeführt werden soll, so werden die Komponenten im allgemeinen vorzugsweise in einem NCO/OH-Verhältnis von 1,1 bis 8, vorzugsweise 1,25 bis 5 eingesetzt. Das Prepolymer kann wiederum in Substanz oder unter Zuhilfenahme eines gegenüber Isocyanatgruppen inerten Lösungsmittels erhalten werden. In einem zweiten Schritt wird dann mit vorzugsweise Amionogruppen enthaltenden Kettenverlängerern, in der Regel unter Verwendung eines Lösungsmittels oder Lösungsmittelgemisches, das Prepolymere in einen polymeren Urethanharnstoff überführt. Bei der Kettenverlängerung in organischer Lösung arbeitet man im allgemeinen mit Feststoffgehalten von 10 - 50, vorzugsweise 20 - 40 Gew.-%. Die Viskositäten der kettenverlängerten Polyurethan(harnstoff)-Lösungen, gemessen bei Raumtemperatur, werden auf vorzugsweise 10 000 - 100.000, besonders bevorzugt 20.000 - 60.000 mPas eingestellt. Zur Gewährleistung einer guten Viskositätsstabilität empfiehlt es sich, nach Erreichen der gewünschten Lösungsviskosität monofunktionelle Kettenabbrecher, wie zum Beispiel die in DE-OS 3 142 706 beschriebenen Oxime, in den erforderlichen Mengen zuzugeben.

Grundsätzlich ist es auch möglich, die Polyurethane bzw. Polyurethanharnstoffe in an sich bekannter Weise mit Hilfe von geeigneten Mischaggregaten, wie zum Beispiel Reaktionsschnecken, in der Schmelze herzustellen und die nach Abkühlung, zum Beispiel in Form von Granulaten, erhaltenen Feststoffe zur Herstellung der erfindungsgemäßen Streichpasten in Lösungsmitteln oder Lösungsmittel-Gemischen aufzulösen.

Als Lösungsmittel kommen stark polare flüchtige organische Verbindungen infrage, wie etwa Dimethylformamid, Diethylacetamid, Dimethylsulfoxid und N-Methylpyrrolidon. Auch Mischungen aus diesen stark polaren und aus schwach polaren Lösungsmitteln wie aromatischen Kohlenwasserstoffen, Estern und Ketonen können verwendet werden. Die bevorzugt zu verwendenden aliphatischen Polyurethan(harnstoff)e werden überwiegend in Mischungen aus schwach polaren Lösern, meist aus Alkoholen und Estern, Ketonen oder aromatischen Kohlenwasserstoffen, gelöst. Dies sind beispielsweise Toluol, Xylol, Ethylbenzol, höher alkylierte Aromaten, die unter dem Begriff Solventnaphtha bekannt sind, Essigester, Ethylenglykolmonomethyl- und monoethyletheracetat, Propylenglykolmonomethyl- und monoethyletheracetat, Butylacetat, Ethanol, Isopropanol, n-Butanol, i-Butanol, die Isomeren des Amylalkohols, Cyclohexanol, Diacetonalkohol, Aceton, Methylethylketon, Methylisobutylketon usw.

Bevorzugte Mischungen sind solche aus Aromaten und Alkoholen, besonders bevorzugt solche aus Toluol und den Isomeren des Butanols.

Die erfindungsgemäß zu verwendenden Polyurethan(harnstoff)e werden in der Regel ohne weitere Zusätze auf ein flexibles, vorzugsweise textiles Substrat aufgebracht. Dies kann durch direktes Streichen auf das Substrat mit Hilfe von Rakelmessern, Walzen oder Drahtrakeln erfolgen. In der Regel werden mehrere Striche hintereinander, bevorzugt jedoch zwei, aufgebracht, so daß die Gesamtdicke der Beschichtung aus Grund- und Deckstrich(en) 10 - 100 µm, bevorzugt 20 -60 µm, beträgt. Als Grundstrich kann auch eine zu einer mikroporösen Schicht auftrocknende Paste verwendet werden, wie es in DE-OS 2 020 153 beschrieben ist. Der anschließend aufgebrachte Deckstrich schützt den gesamten Verbund gegen mechanische Beanspruchung und Abrieb.

Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten (Grund-oder Haft-)Striches wird das textile Substrat in die noch feuchte Schicht leicht eingedrückt. Nach dem Trocknen entsteht ein fester Verbund aus Beschichtung und Substrat, der vom Trennträger gelöst wird und in seinem Aufbau weitgehend dem der vorher beschriebenen Direktbeschichtung entspricht.

Die wasserdampfdurchlässigen Beschichtungen können auch aus Lösungen hergestellt werden, die mit Pigmenten und/oder Farbstoffen versehen sind. Darüber hinaus können Hydrophobierungsmittel wie Fluorcarbonharze, Wachse und Öle zugesetzt werden, soweit dies die Wasserdampfdurchlässigkeit nicht übermäßig verschlechtert. Ferner ist der Zusatz von vernetzenden Additiven möglich, die eine Reaktion mit sich selbst oder dem Polyurethan(harnstoff) erst in der fertigen Beschichtung, in der Regel durch Hitzeeinwirkung, eingehen. Zu diesen Verbindungen gehören (teilweise) veretherte Melaminformaldehydharze, z.B. Hexamethylolmelamin und gegebenenfalls blockierte Polyisocyanate mit 3 und mehr Isocyanatgruppen, z.B. Tris[isocyanatohexyl]isocyanurat und Tris[isocyanatohexyl]biuret.

## Vergleichsbeispiel 1

600 g eines aus Hexandiol und Diphenylcarbonat hergestellten Polycarbonats (OH-Zahl: 56; MG: ca. 2000) und 1400 g eines auf Ethylenglykol gestarteten Polyethers aus Ethylenoxid (OH-Zahl: 56; MG: ca.

2000) werden gemeinsam bei 110°C im Wasserstrahlvakuum entwässert und anschließend bei ca. 40°C mit 270 g Butandiol-1,4 und 3050 g Dimethylformamid sowie 4580 g Toluol vermischt. Jetzt werden 950 g 4,4'-Diisocyanatodiphenylmethan (MDI) zugesetzt und die Lösung unter langsamen Anheben der Temperatur solange gerührt, bis IR-spektroskopisch kein Isocyanat mehr nachweisbar ist. Nun werden 5-g-Portionen MDI so oft nach und nach zugegeben und bis zum Verschwinden freier NCO-Gruppen verrührt, bis die Viskosität der Lösung etwa 10.000 mPas beträgt.

Ein aus dieser Lösung gegossener freitragender Film von 26 µm Dicke besitzt eine Wasserdampfdurchlässigkeit (nach DIN 53 333) von 3,6 mg/h $cm^2$.

Die mechanischen Eigenschaften im Neuzustand und nach hydrolytischer Alterung zeigt die folgende Tabelle:

| | Hydrolyse 70°C, 95 % rel. F. | | | | |
|---|---|---|---|---|---|
| | O-Wert | 2 Wo | 4 Wo | 6 Wo | 8 Wo |
| Zugfestigkeit (MPa) | 40 | 40 | 37 | 35 | 34 |
| Bruchdehnung (%) | 500 | 600 | 650 | 700 | 700 |

Vergleichsbeispiel 2

Nach der Verfahrensweise des Vergleichsbeispiel 1 wird ein Polyurethan aus folgenden Komponenten hergestellt:
1208 g eines Umsetzungsprodukts aus 96,4 Gew.-% eines Polycarbonats, das aus 40 Mol-% Hexandiol-1,6, 60 Mol-% Tetraethylenglykol und Diphenylcarbonat hergestellt worden ist und 3,6 Gew.-% Toluylendiisocyanat-2,4 (OH-Zahl: ca. 56),
800 g des auf Ethylenglykol gestarteten Polyethers aus Ethylenoxid (OH-Zahl: 56),
270 g Butandiol-1,4
ca. 950 g 4,4'-Diisocyanatodiphenylmethan
3060 g Dimethylformamid und
4590 g Toluol.

Ein aus dieser Lösung erzeugter freitragender Film von 32 µm Dicke weist eine Wasserdampfdurchlässigkeit (DIN 53 333) von 3,9 mg/h $cm^2$ auf.

Die mechanischen Eigenschaften im Neuzustand und nach hydrolytischer Alterung zeigt die folgende Tabelle:

| | Hydrolyse 70°C, 95 % rel. F. | | | | |
|---|---|---|---|---|---|
| | O-Wert | 2 Wo | 4 Wo | 6 Wo | 8 Wo |
| Zugfestigkeit (MPa) | 40 | 40 | 35 | 24 | 25 |
| Bruchdehnung (%) | 630 | 630 | 680 | 660 | 730 |

Beispiel 1

1000 g eines Polycarbonats aus Diphenylcarbonat und einem Dihydroxylester aus 1 Mol Hexandiol-1,6 und 1 Mol Caprolacton (OH-Zahl: 56; MG: 2000)und 1000 g des Polyethylenglykolpolyethers aus Vergleichsbeispiel 1 werden im Wasserstrahlvakuum entwässert und mit einer Mischung aus 255,3 g 3-Isocyanatomethyl-3,5,5-trimethyl-cyclohexylisocyanat (IPDI) und 62,2 g Hexamethylendiisocyanat versetzt und bei 100°C solange gerührt, bis der NCO-Gehalt der Mischung unter 1,9 % gefallen ist. Das entstandene Isocyanatprepolymer wird in 1165 g Toluol aufgelöst. 19 g Hydrazinhydrat werden mit 1165 g t-Butanol vermischt; diese Mischung wird langsam der bei ca. 25 - 30°C gerührten Prepolymerlösung zugesetzt. Die Viskosität nimmt dabei gegen Ende der Reaktion zu; die Zugabe wird gestoppt, wenn 40.000 mPas überschritten sind. Nun werden 3,5 g Butanonoxim zugegeben und eine halbe Stunde verrührt. Man erhält eine 50 %ige Lösung des Polyurethanpolyharnstoffs.

100 g dieser Lösung werden mit 10 g eines Vernetzers auf Basis eines Hexa-methoxy/butoxy-melaminharzes und 1 g Toluolsulfonsäure als Katalysator versetzt und zu einem Film mit 60 µm Naßdicke auf

einem Trennträger aufgetragen. Nach dem Abdunsten der Lösungsmittel wird 5 Minuten bei 140 °C ausgehärtet. Der vom Träger abgelöste Film besitzt eine Wasserdampfdurchlässigkeit von 5,5 mg/h $cm^2$.

Die Zugfestigkeit dieses Films beträgt nur 2,5 MPa, die aber nach 2-wöchiger Hydrolysebeanspruchung, wie in Beispiel 1 und 2, erhalten bleibt.

## Beispiel 2

Nach der Verfahrensweise des Beispiels 1 wird ein Polyurethanharnstoff aus folgenden Komponenten hergestellt:

1320 g des Polycarbonats aus Beispiel 1
400 g des Polyethylenglykolpolyethers aus Vergleichsbeispiel 1
84 g eines endständige Hydroxymethylgruppen aufweisenden Dimethylpolysiloxans (MG: 600)
710,4 g IPDI
374 g 3-Aminomethyl-3,5,5-trimethylcyclohexylamin (IPDA)
3370 g Toluol und
3370 g i-Butanol

Die Viskosität der 30 %igen Lösung beträgt etwa 15.000 mPas. Ein aus dieser Lösung gegossener freitragender Film von 35 µm Dicke besitzt eine Wasserdampfdurchlässigkeit von 2,7 g/h $cm^2$ (Din 53 333).

Die mechanischen Eigenschaften im Neuzustand und nach hydrolytischer Alterung zeigt die folgende Tabelle:

| | Hydrolyse 70 °C, 95 % rel. F. | | | | |
|---|---|---|---|---|---|
| | O-Wert | 2 Wo | 4 Wo | 6 Wo | 8 Wo |
| Zugfestigkeit (MPa) | 50 | 40 | 36 | 36 | 26 |
| Bruchdehnung (%) | 480 | 400 | 425 | 425 | 390 |

## Beispiel 3

Nach der Verfahrensweise des Beispiels 1 wird ein Polyurethanharnstoff aus folgenden Komponenten hergestellt:

1000 g des Polycarbonats aus Beispiel 1
1000 g des Polyethylenglykolpolyethers aus Vergleichsbeispiel 1
732,6 g IPDI
195,5 g IPDA
57,5 g Hydrazinhydrat
3460 g Toluol und
3460 g i-Butanol

Die Viskosität der 30 %igen Lösung beträgt etwa 20.000 mPas. Ein aus dieser Lösung erzeugter freitragender Film von 29 µm Dicke hat eine Wasserdampfdurchlässigkeit (nach DIN 53 333) von 3,2 mg/h $cm^2$.

Die mechanischen Eigenschaften im Neuzustand und nach hydrolytischer Alterung zeigt die folgende Tabelle:

| | Hydrolyse 70 °C, 95 % rel. F. | | | | |
|---|---|---|---|---|---|
| | O-Wert | 2 Wo | 4 Wo | 6 Wo | 8 Wo |
| Zugfestigkeit (MPa) | 40 | 40 | 35 | 32 | 32 |
| Bruchdehnung (%) | 510 | 530 | 590 | 620 | 600 |

## Vergleichsbeispiel 3

Vergleichsbeispiel 1 wird wiederholt mit der Maßgabe, daß das Polycarbonat der OH-Zahl 56 durch die gleiche Menge eines Polyesters aus Adipinsäure und Hexandiol-1,6 und Neopentylglykol (im Molverhältnis

65:35) mit der OH-Zahl 56 ausgetauscht wird.

Die Wasserdampfdurchlässigkeit eines 30 µm dicken freitragenden Films beträgt 3,8 mg/h $cm^2$ (nach DIN 53 333).

Die mechanischen Eigenschaften im Neuzustand und nach hydrolytischer Alterung zeigt die folgende Tabelle:

| | Hydrolyse 70 °C, 95 % rel. F. | | | | |
|---|---|---|---|---|---|
| | O-Wert | 2 Wo | 4 Wo | 6 Wo | 8 Wo |
| Zugfestigkeit (MPa) | 45 | 27 | 12 | -* | -* |
| Bruchdehnung (%) | 480 | 590 | 650 | | |

* Film zerlaufen, keine Messung möglich

Veraleichsbeispiel 4

Vergleichsbeispiel 1 wiederholt mit der Maßgabe, daß das Polycarbonat der OH-Zahl 56 durch die gleiche Menge eines Polypropylenglykols (hergestellt durch die Umsetzung von Propylenglykol mit Propylenoxid) der OH-Zahl 56 ausgetauscht wird.

Die Wasserdampfdurchlässigkeit eines 25 µm dicken freitragenden Films beträgt 4,1 mg/h $cm^2$ (nach DIN 53 333).

Im Direktstrickverfahren werden aus den Lösungen der Vergleichsbeispiele 1 und 4 auf Polyamidgewebe Beschichtungen von ungefähr 35 µm Trockendicke erzeugt. Daraus geschnittene Prüfkörper werden im Bally-Flexometer nach DIN 53 351 auf ihre Knickfestigkeit überprüft. Begutachtet wird das Auftreten von Rissen und Ablösungen in der Beschichtung. Die Resultate zeigt die folgende Tabelle:

| Zahl der Knickungen: | | |
|---|---|---|
| | Vergleichsbeispiel 1 | Vergleichsbeispiel 4 |
| trocken RT | >50.000 | <5.000 |
| trocken 0 °C | 10.000 | 2.000 |

**Patentansprüche**

**1.** Verfahren zur Herstellung von Beschichtungen unter Verwendung von Polyurethan(harnstoff)en aus Diisocyanaten und Dihydroxyverbindungen vom Molekulargewicht 300 - 6000 sowie gegebenenfalls weiteren Aufbaukomponenten, die Aminogruppen aufweisen können, und/oder Zusatzstoffen, dadurch gekennzeichnet, daß die Dihydroxyverbindungen aus A) 20-60 Gew.-% gegebenenfalls modifizierten Polyethylenglykolen, B) 1 - 80 Gew.-% Polycarbonaten, deren Diolkomponente 40 - 100 Gew.-% Umsetzungsprodukt aus 1 Mol Hexandiol-1.6 und 1 bis 2 Mol Caprolacton enthält, und C) gegebenenfalls anderen Dihydroxyverbindungen bestehen, wobei (A) + (B) + (C) = 100 Gew.-%.

**2.** Verfahren gemäß Anspruch 1, dadurch gekennzeichnet, daß man 25 - 50 Gew.-% gegebenenfalls modifizierte Polyethylenglykole einsetzt.

**3.** Verfahren gemäß den Ansprüchen 1 und 2, dadurch gekennzeichnet, daß man Polyethylenglykole vom Molekulargewicht 500 - 3000 einsetzt.

**4.** Verfahren gemäß den Ansprüchen 1 und 2, dadurch gekennzeichnet, daß man Polyethylenglykole vom Molekulargewicht 800 - 2500 einsetzt.

**5.** Verfahren gemäß den Ansprüchen 1 - 4, dadurch gekennzeichnet, daß das Diisocyanat Isophorondiisocyanat ist.

6. Verfahren gemäß den Ansprüchen 1 - 4, dadurch gekennzeichnet, daß das Diisocyanat 4,4'-Diisocyanatodiphenylmethanist.

7. Verfahren gemäß Ansprüchen 1 - 6, dadurch gekennzeichnet, daß zum Aufbau der erfindungsgemäß verwendeten Polyurethanharnstoffe Kettenverlängerer vom Molekulargewicht 60 - 299, die 1 bis 4 Hydroxyl- oder Aminogruppen aufweisen, mitverwendet werden.

8. Verfahren gemäß Anspruch 7, dadurch gekennzeichnet, daß Hydrazin verwendet wird.

9. Gemäß den Verfahren der Ansprüche 1 - 8 hergestellte wasserdampfdurchlässige Beschichtungen.

10. Verwendung von Polyurethan(harnstoff)en aus Diisocyanaten und Dihydroxyverbindungen vom Molekulargewicht 300 - 6000 sowie gegebenenfalls weiteren Aufbaukomponenten und/oder Zusatzstoffen, wobei die Dihydroxyverbindungen aus A) 20 - 60 Gew.-% gegebenenfalls modifizierten Polyethylenglykolen, B) 1 - 80 Gew.-% Polycarbonaten, deren Diolkomponente 40 - 100 Gew.-% Hexandiol und/oder Hexandiol-Derivate enthält, und C) gegebenenfalls anderen Dihydroxyverbindungen bestehen, wobei (A) + (B) + (C) = 100 Gew.-%, zur Herstellung wasserdampfdurchlässiger Beschichtungen.

## Claims

1. A process for the production of coatings using polyurethane(urea)s of diisocyanates and dihydroxy compounds having a molecular weight of 300 to 6000 and, optionally, other synthesis components which may contain amino groups and/or additives, characterized in that the dihydroxy compounds consist of A) 20 to 60% by weight optionally modified polyethylene glycols, B) 1 to 80% by weight polycarbonates, of which the diol component contains 40 to 100% by weight of the reaction product of 1,6-hexanediol and 1 to 2 mol caprolactone, and C) optionally other dihydroxy compounds, (A) + (B) + (C) totalling 100% by weight.

2. A process as claimed in claim 1, characterized in that 25 to 50% by weight optionally modified polyethylene glycols are used.

3. A process as claimed in claims 1 and 2, characterized in that polyethylene glycols having a molecular weight of 500 to 3000 are used.

4. A process as claimed in claims 1 and 2, characterized in that polyethylene glycols having a molecular weight of 800 to 2500 are used.

5. A process as claimed in claims 1 to 4, characterized in that the diisocyanate is isophorone diisocyanate.

6. A process as claimed in claims 1 to 4, characterized in that the diisocyanate is 4,4'-diisocyanatodiphenyl methane.

7. A process as claimed in claims 1 to 6, characterized in that chain extenders having a molecular weight of 60 to 299 and containing 1 to 4 hydroxyl or amino groups are used for the synthesis of the polyurethane ureas used in accordance with the invention.

8. A process as claimed in claim 7, characterized in that hydrazine is used.

9. Coatings permeable to water vapour prepared by the process claimed in claims 1 to 8.

10. The use of polyurethane(urea)s of diisocyanates and dihydroxy compounds having a molecular weight of 300 to 6000 and, optionally, other synthesis components and/or additives, the dihydroxy compounds consisting of A) 20 to 60% by weight optionally modified polyethylene glycols, B) 1 to 80% by weight polycarbonates of which the diol component contains 40 to 100% by weight hexanediol and/or hexanediol derivatives and C) optionally other dihydroxy compounds, (A) + (B) + (C) = 100% by weight, for the production of coatings permeable to water vapour.

## Revendications

1. Procédé de production de revêtements utilisant des polyuréthanne(urées) dérivés de diisocyanates et de composés dihydroxyliques d'un poids moléculaire de 300 à 6000 ainsi que, le cas échéant, d'autres composants structuraux, qui peuvent présenter des groupes amino, et/ou d'additifs, caractérisé en ce que les composés dihydroxyliques sont constitués A) de 20 à 60 % en poids de polyéthylène-glycols éventuellement modifiés, a) de 1 à 80 % en poids de polycarbonates dont le composant diol contient 40 à 100 % en poids de produit de réaction de 1 mole d'hexanediol-1,6 et de 1 à 2 moles de caprolactone, et C) le cas échéant d'autres composés dihydroxyliques, la somme (A) + (B) + (C) étant égale à 100 % en poids.

2. Procédé suivant la revendication 1, caractérisé en ce qu'on utilise 25 à 50 % en poids de polyéthylène-glycols éventuellement modifiés.

3. Procédé suivant les revendications 1 et 2, caractérisé en ce qu'on utilise des polyéthylène-glycols d'un poids moléculaire de 500 à 3000.

4. Procédé suivant les revendications 1 et 2, caractérisé en ce qu'on utilise des polyéthylène-glycols d'un poids moléculaire de 800 à 2500.

5. Procédé suivant les revendications 1 à 4, caractérisé en ce que le diisocyanate est l'isophoronediisocyanate.

6. Procédé suivant les revendications 1 à 4, caractérisé en ce que le diisocyanate est le 4,4'-diisocyanatodiphénylméthane.

7. Procédé suivant les revendications 1 à 6, caractérisé en ce qu'on utilise en même temps pour l'édification des polyuréthanne-urées utilisées conformément à l'invention, des agents d'allongement de chaîne d'un poids moléculaire de 60 à 299 qui portent 1 à 4 groupes hydroxyle ou amino.

8. Procédé suivant la revendication 7, caractérisé en ce qu'on utilise l'hydrazine.

9. Revêtements perméables à la vapeur d'eau produits par le procédé suivant les revendications 1 à 8.

10. Utilisation de polyuréthanne(urées) dérivées de diisocyanates et de composés dihydroxyliques d'un poids moléculaire de 300 à 6000 ainsi que, le cas échéant, d'autres composants structuraux et/ou d'additifs, les composés dihydroxyliques étant constitués A) de 20 à 60 % en poids de polyéthylène-glycols éventuellement modifiés, B) de 1 à 80 % en poids de polycarbonates dont le composant diol contient 40 à 100 % en poids d'hexanediol et/ou de dérivés d'hexanediol et C) le cas échéant, d'autres composés dihydroxyliques, la somme (A) + (B) + (C) étant égale à 100 % en poids, pour la production de revêtements perméables à la vapeur d'eau.